# EUROPEAN PATENT SPECIFICATION

(11) **EP 1 230 794 B1**
(45) Date of publication and mention of the grant of the patent: **02.07.2003**
(21) Application number: 00977063.7
(22) Date of filing: 08.11.2000
(51) Int. Cl.: H04N 5/76

(54) **Improved pseudo-simultaneous recording and playback for a DVD device**
Verbessertes pseudo-gleichzeitiges Aufzeichnen und Wiedergeben für ein DVD-Gerät
Enregistrement et reproduction pseudo-simultanés améliorés pour un appareil DVD

(30) Priority: 10.11.1999 US 164791 P
(43) Date of publication of application: 14.08.2002
(73) Proprietor: Thomson Licensing S.A., 92648 Boulogne Cedex (FR)
(72) Inventor: WILLIS, Donald, Henry, Indianapolis, IN 46250 (US)
(74) Representative: Thies, Stephan
(86) International application number: PCT/US00/30699
(87) International publication number: WO 01/035645

(56) References cited:
- US-A- 5 566 146
- US-A- 5 889 920
- KAGEYAMA ET AL.: "A FREE TIME-SHIFT DVD VIDEO RECORDER" IEEE TRANSACTIONS ON CONSUMER ELECTRONICS, vol. 43, no. 3, August 1997 (1997-08), pages 469-473, XP000742519 NEW YORK US

## Description

### BACKGROUND OF THE INVENTION

### Technical Field

The inventive arrangements relate generally to methods and apparatus providing advanced operating features for audio only, video only and both video and audio programs recorded on disc media, for example recordable digital video discs, hard drives and magneto optical discs.

### Description of the Related Art

Various devices have been developed to enable consumers to record video and/or audio programs for later presentation. Such devices include tape recorders, video cassette recorders, recordable compact discs, and most recently, recordable digital video discs (DVD). Hard drives and magneto optical discs have also been used. Reference is made to US-A-5 889 920 US-A-5 566 146, and IEEE Trans. CE-43, Arg. 1997, pp. 469-473.

A DVD that can be recorded on only once, and thereafter is essentially a DVD read only memory, is referred to by the acronym DVD-R. The acronym DVD-R is also used generally to refer to the write-once, or record-once, technology. Several formats are available for DVD's to be recorded on, erased and re-recorded; that is, overwritten or rewritten. These are referred to by the acronyms DVD-RAM, DVD-RW and DVD + RW. As of this time no uniform industry standard has been adopted. The acronyms DVD-RAM, DVD-RW and DVD +RW are also used generally to refer to the respective rewritable technologies. Reference herein to rewritable DVD technology, devices and methods is generally intended to encompass all of the standards which are now being used, as well as those which may be developed in the future.

In many cases, the program presentations are recorded in the viewer's absence for presentation at a later, more convenient time. This is referred to as time shifting the program. At other times, the viewer may be called away while he is watching a program that is not being recorded. If the viewer owns a conventional video cassette recorder, the viewer may begin recording the program during the interruption. The viewer, however, must wait until the program is completed to watch the remainder of the program in a proper time sequence. A further complication is that the time to complete the recording can be excessive depending on the length of the broadcast. This can result in the viewer ignoring the interruption or missing significant portions of the program.

To overcome this problem, a DVD video recorder can incorporate a pause feature. When activated, this setting, similar to other conventional video recording machines, allows the viewer to record incoming video. Significantly, however, when the pause resume feature is activated, the DVD video recorder jumps back to that portion of the program where the pause was initiated to commence playback yet continues to record incoming video. As a result, a viewer, if interrupted for any number of reasons, can watch a program in its entirety without having to wait for the original broadcast to end.

Although it may appear to be simultaneous, the DVD recorder cannot read and write data at the same time. Thus, to achieve seamless playback, the DVD recorder must alternate between recording data on the disc and reading this data. The time allotted for either reading or writing data is determined, at least in part, by the limited size of the DVD recorder's data buffers. As a consequence, the recorder must constantly switch between reading and writing to avoid buffer overflow or underflow. The DVD recorder, however, cannot read or write data during these transitions. Therefore, this process of alternating between reading and writing data causes a significant decrease in the combined average bit rate associated with the reading and writing process. This presents a significant problem in that a relatively high combined average bit rate for reading and writing must be maintained in order to provide seamless playback.

In view of the bit rate problem, the DVD device requires high reading and writing speeds to overcome the inefficiencies associated with the jumping process. Unfortunately, writing speed is limited because writing data on a disc is thermal in nature and cannot be easily increased. Increasing the reading speed is a potential solution. To accomplish faster reading, the DVD device can increase the speed of the disc when the pause feature is in read mode. Speeding up the reading rate can increase the combined average bit rate. As will be further illustrated, however, this procedure alone is insufficient for purposes of producing a seamless playback because of a second factor that negatively affects the average bit rate.

For a given angular velocity of a disc, the linear velocity at an outer radius of that disc is higher than the linear velocity at an inner radius. Conventional recordable DVD devices that implement a pause feature record data beginning at an inner radius of the disc and continue recording data outwardly to an outer radius of the disc. Thus, as the read/write head of the DVD device moves towards the outer part of the disc while the device is recording data, the angular velocity of the disc must decrease to allow recording to be performed at its limited rate.

When the DVD device transitions from writing to reading, the read/write head must jump back to an inner radius to read the previously recorded data. The linear velocity at that particular inner radius, however, is much lower for a given disc RPM speed as compared to the linear velocity at the outer radius at which data was last written. As a result, the RPM speed of the disc must be increased significantly to allow the DVD device to read data at its maximum rate. Conversely, jumping back to write data at an outer radius necessitates an equivalent slowdown due to the limited rate at which data can be written. With a spindle motor having limited torque, these changes in angular velocity take an appreciable amount of time thereby negatively affecting the overall reading duty cycle. Moreover, these constant changes in velocity increase the wear and tear on the motor and causes an increase in power consumption.

Employing larger data buffers to provide a greater amount of temporary storage space for the data does help somewhat in preventing buffer overflow or underflow. Such a strategy can enable the system to operate at a lower average bit rate. This solution alone, however, is insufficient for the system to maintain the average bit rate required for seamless playback because of the constant switching between reading and writing and the frequent changes in disc rotational speed. In addition, greater memory requirements lead to increased costs.

### Summary of the Invention

The invention features a method for pausing a video presentation in a recordable disc medium device. In one arrangement, the method includes the steps of: recording the video presentation on the disc medium beginning at a selected record location in response to a pause command; and, in response to a pause resume command, periodically interrupting the recording at a first disc medium location to read from the disc medium a portion of the recorded video presentation at a second record location. In the foregoing arrangement, the first disc medium location is at a disc radius less than the second record location. In another aspect, the invention also features a recordable disc medium system for pausing a video presentation. In one arrangement, the recordable disc medium system includes: a disc medium recorder responsive to a pause command for recording the video presentation on a disc medium at a selected record location; and, a disc player responsive to a pause resume command for periodically interrupting the recording at a first disc medium location to read from the disc medium a portion of the recorded video presentation at a second record location. In the foregoing arrangement, the first disc medium location is at a disc radius less than the second record location.

In the above method and system, the recording can occur continuously inwardly towards the center of the disc medium along a spiral track of the disc medium. In another variation of the above method and system, the recording can occur sequentially inwardly towards the center of the disc medium, the recording occurring in a plurality of zones located on the disc medium. The plurality of zones can be radially defined from outermost to innermost, the recording beginning at one of the outermost plurality of zones and ending at one of the innermost plurality of zones. Further, the recording within each one of the plurality of zones can occur radially outwardly along a spiral track of the disc medium.

In another variation of the above method and system, the rotational speed of the disc medium can be maintained at a constant velocity during interruption of the recording of the pause resume command. In another embodiment, the recording step can determine the rotational speed of the disc medium during the recording and the reading steps following the pause resume command.

### Brief Description of the Drawings

FIG. 1 is a block diagram of a rewritable DVD device that can be provided with one or more advanced operating features in accordance with the inventive arrangements.
FIG. 2 is a diagram useful for illustrating the spiral track on a rewritable DVD disc.
FIG. 3 is a block diagram illustrating the process of writing data to a DVD disc continuously from an outer radius of the disc to an inner radius of the disc.
FIG. 4 is a block diagram illustrating the process of reading data from a DVD disc and temporarily storing incoming data in a data buffer.
FIG. 5 is a block diagram illustrating the process of writing data to a DVD disc from an outer radius of the disc to an inner radius and continuing to display previously read data from a data buffer.
FIG. 6 is a flow chart illustrating the preferred operation of a DVD device that implements a pause function that continuously writes data from an outer radius of a DVD disc to an inner radius of the disc and periodically interrupts the writing step to read the written data.
FIG. 7 is a block diagram illustrating the process of writing data to a DVD disc sequentially inwardly in zones from an outermost zone to an innermost zone.
FIG. 8 is a block diagram illustrating the process of reading data from an outermost zone on a DVD disc and temporarily storing incoming data in a data buffer.
FIG. 9 is a block diagram illustrating the process of writing data in an innermost zone on a DVD disc and continuing to display previously read data from a data buffer.
FIG. 10 is a flow chart illustrating the preferred operation of a DVD device that implements a pause function that writes data to a DVD disc sequentially inwardly from an outermost zone on a disc to an innermost zone on the disc and periodically interrupts the writing step to read the written data.

### Detailed Description of the Preferred Embodiments

### Recordable DVD Device

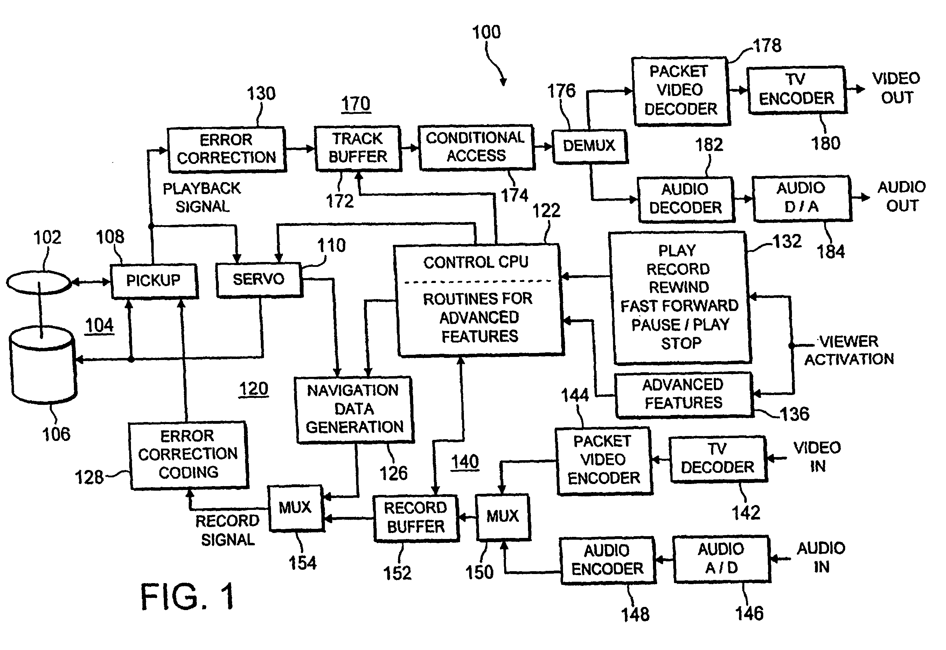

A device 100 for implementing the various advanced operating features in accordance with the inventive arrangements taught herein utilizes a rewritable disc medium 102 in accordance with the inventive arrangements is shown in block diagram form in FIG. 1. The rewritable disc medium 102 is embodied as a rewritable DVD in the illustrated embodiment. In many instances, as will be noted, the rewritable disc medium can also be, for example, a hard drive or a magneto optical disc (MOD). An example of a MOD is a mini-disc. In many instances, the inventive arrangements are applicable to video or audio or both video and audio.

The device 100 is capable of writing onto and reading from the disc medium, in this example, a rewritable DVD 102. The device comprises a mechanical assembly 104, a control section 120, a video/audio input processing path 140 and a video/audio output processing path 170. The allocation of most of the blocks to different sections or paths is self-evident, whereas the allocation of some of the blocks is made for purposes of convenience and is not critical to understanding the operation of the device.

The mechanical assembly 104 comprises a motor 106 for spinning the DVD 102 and a pickup assembly 108 that is adapted to be moved over the spinning disc. A laser on the pickup assembly 108 burns spots onto a spiral track on the disc 102 or illuminates spots already burned onto the track for recording and playing back video and/or audio program material. For purposes of understanding the invention, it is irrelevant whether the disc is recordable on one or two sides, or in the event of a double-sided recording, whether the double-sided recording, or subsequent reading from the disc, takes place from the same side of the disc or from both sides. The pickup and the motor are controlled by a servo 110. The servo 110 also receives the Playback Signal of data read from the spiral track of the disc 102 as a first input. The Playback Signal is also an input to an error correction circuit 130, which can be considered part of the control section or part of the video/audio output processing path.

The control section 120 comprises a control central processing unit (CPU) 122 and a navigation data generation circuit 126. The control CPU 122 supplies a first input signal to the navigation data generation circuit 126 and the servo 110 supplies a second input signal to the navigation data generation circuit 126. The servo can also be considered part of the control section. The navigation data generation circuit 126 supplies a first input signal to the multiplexer (MUX) 154, which forms part of the video/audio input processing path 140.

The output of the MUX 154 is an input to an error correction coding circuit 128. The output of the error correction coding circuit 128 is a recordable input signal supplied to the pickup 108, which will be "burned" onto the spiral track of the disc 102 by the laser.

The control CPU 122 also preferably has access to the data contained in the track buffer 172 and record buffer 152 as shown in FIG. 1. CPU 122 can delete, modify, and reformat video data stored in the track buffer 172 and record buffer 152. Control and data interfaces are also preferably provided for permitting CPU 122 to control the operation of video encoder 144 and audio encoder 148. Suitable software or firmware is provided in memory for the conventional operations performed by control CPU 122.

A control buffer 132 for viewer activatable functions indicates those functions presently available, namely play, record, reverse, fast forward, slow play, pause/play and stop. A separate buffer 136 is provided to receive commands for implementing the inventive arrangements taught herein. For example, the special pause feature as described herein can be accessed via the buffer 136.

The video/audio input processing path 140 is a signal processing circuit for converting a conventional television signal, for example NTSC or PAL, into digitized packet data, for example MPEG-1 or MPEG-2, for digital recording by the device 100. The input path 140 comprises an NTSC decoder 142 and video encoder, for example MPEG-1 or MPEG-2, 144 for video in, and comprises an audio analog-to-digital converter (A/D) 146 and an audio encoder, for example MPEG-1 or MPEG-2, 148. The digitized signals are combined in a multiplexer 150 and stored in a record buffer 152 until an entire packet has been constructed. As groups of audio and video data packets are created, they are combined in MUX 154 with appropriate navigation packets generated in the navigation data generation block 126. The packets are then sent on to the error correction coding circuit 128. Error correction coding circuit 128 can also be deemed to be part of the input path 140.

The output processing path 170 comprises error correction block 130 and a track buffer, or output buffer, 172, in which data read from the disc is assembled into packets for further processing. The packets are processed by conditional access circuit 174 that controls propagation of the packets through demultiplexer 176 and into respective paths for video and audio processing.

The video is decoded by decoder 178, for example from MPEG-1 or MPEG-2, and encoded as a conventional television signal, for example NTSC or PAL. The audio is decoded by circuit 182, for example from MPEG-1 or MPEG-2, and converted to analog form by audio digital-to-analog (D/A) converter 184.

Notably, the present invention can be realized in hardware, software, or a combination of hardware and software. Machine readable storage according to the present invention can be realized in a centralized fashion in one computer system, for example the control CPU 122, or in a distributed fashion where different elements are spread across several interconnected computer systems. Any kind of computer system or other apparatus adapted for carrying out the methods described herein is acceptable.

Specifically, although the present invention as described herein contemplates the control CPU 122 of FIG. 1, a typical combination of hardware and software could be a general purpose computer system with a computer program that, when being loaded and executed, controls the computer system and a DVD recording system similar to the control section 120 of FIG. 1 such that it carries out the methods described herein. The present invention can also be embedded in a computer program product which comprises all the features enabling the implementation of the methods described herein, and which when loaded in a computer system is able to carry out these methods.

A computer program in the present context can mean any expression, in any language, code or notation, of a set of instructions intended to cause a system having an information processing capability to perform a particular function either directly or after either or both of the following: (a) conversion to another language, code or notation; and (b) reproduction in a different material form. The invention disclosed herein can be a method embedded in a computer program which can be implemented by a programmer using commercially available development tools for operating systems compatible with the control CPU 122 described above.

### DVD Media

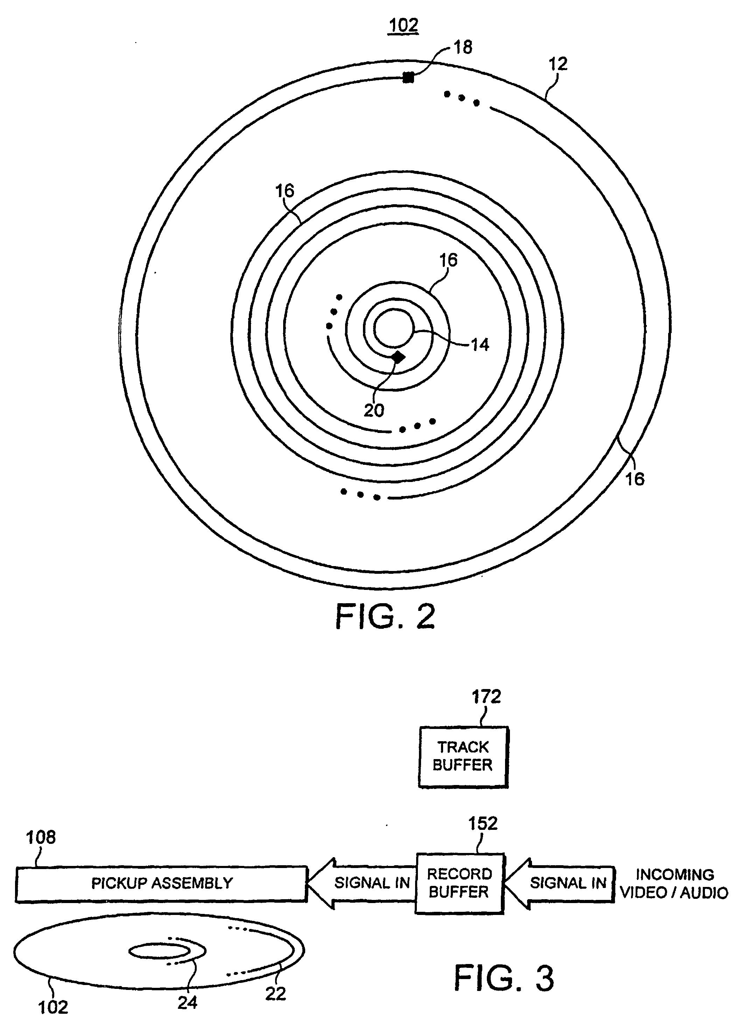

For purposes of illustrating the inventive arrangements, program material can be recorded onto a rewritable DVD and played back from a rewritable DVD. Those skilled in the art, however, will appreciate that the invention is not limited in this regard. Rather, a pause feature that employs outer to inner recording can be used with any type of disc media, including but not limited to DVD-R or DVD-RW type media. Referring to FIG. 2, the disc 102 is more clearly shown. The disc 102 is formed by a flat, round plastic plate-like member 12. The rewritable DVD can consist of two substrates bonded together by an adhesive layer forming a 1.2mm thick disk. A center hole 14 can be formed in the disk so that a gripping device of the motor 106 of FIG. 1 can securely grip the disk and control the angular motion of the same in accordance with the inventive arrangements. Additionally, the DVD device can spin the DVD in a clockwise or counter-clockwise direction, as the rotational direction of the DVD during the reading and writing steps is not critical for purposes of the invention.

The direction of recording on a conventional recordable disc medium is typically outwardly along a spiral track, from a smaller radius part of the spiral to a larger radius part of the spiral. In accordance with one of the inventive arrangements herein, however, recording on the spiral track 16 is inwardly along the spiral track 16 from a larger radius on the disc 102 to a smaller radius. The several series of three large dots (_ _ _) denote portions of the track not shown in the drawing. Accordingly, the beginning of the spiral track is deemed to be near the rim and is denoted by square 18. Additionally, the spiral is deemed to end near the hole 14 and is denoted by diamond 20.

Alternatively, recording on the spiral track 16 can occur in zones on the disc 102 from an outermost zone to an innermost zone. This particular process will be explained in detail below. In either embodiment, the track can also have a side-to-side wobble, not shown in the drawing, to accommodate media type indexing. Due to difficulties of scale only portions of the track 16 are shown, and these are shown in greatly enlarged scale.

Each nearly circular, radially concentric section of the spiral is sometimes referred to as a track, but this terminology is not commonly accepted as having that specific meaning. In CD-ROM's, for example, the term track is also used to refer to that portion of the spiral track that contains a single audio song, or other selection, and the same may or may not become common for DVD's.

### Outer To Inner Recording For Pause Feature

A recordable disc medium device having a pause feature must be capable of concurrently recording an incoming presentation to a disc medium and playing back an earlier part of the presentation previously recorded to the medium. Although the presentation can be video, audio or a combination thereof, it is understood that the device is not limited in this regard. For example, a recordable disc medium device can record and play video, audio or a combination thereof. The inventive arrangements herein implement a pause feature by causing the recordable disc medium device to interrupt periodically the writing of incoming data to a disc to read a portion of such data recorded on the disc. For convenience, the invention shall be described relative to a recordable DVD device, it being understood that the invention is not so limited.

Conventional recordable DVD devices record data beginning at an inner radius of the disc medium and continue recording data outwardly to an outer radius of the disc. Thus, if a pause feature is implemented in a conventional DVD device, the device will record from an inner radius and proceed radially outwardly towards the outer edge of the disc. Under this arrangement, when the read/write head jumps to an inner radius to read data, the DVD device can be designed to keep the speed of the disc constant during the reading step. Alternatively, the DVD device can be designed to accelerate the speed of the disc during the reading step and then decelerate the disc in anticipation of the next writing step.

Under the first design wherein the speed of the disc is kept constant, the reading rate may be too low to prevent buffer underflow. This is because the linear velocity at the inner radius where reading is currently taking place is much lower than the linear velocity at the outer radius where writing previously occurred. Accordingly, the combined average bit rate will drop. As used herein, the combined average bit rate refers to the bit rate of the reading process averaged with the bit rate of the writing process.

Varying the RPM speed of the disc, as contemplated in the second design, will maintain a sufficient combined average bit rate; however, the constant acceleration and deceleration of the disc causes excessive wear on the motor and leads to greater power consumption levels. The present invention overcomes the disadvantages of both alternatives by maintaining a sufficient combined average bit rate without substantially changing the rotational speed of the disc. The invention does this by initiating the recording step at an outer radius of the disc and recording data radially inwardly towards the center of the disc. This process enables the recordable DVD device to jump back and read data at a higher rate without substantially varying the rotational speed of the disc as the device reads data. FIGS. 3-5 illustrate one way how the present invention performs such a process.

As shown in FIG. 3, once the DVD device receives a pause command, the DVD device can move a pickup assembly 108 to a selected location on the disc 102. Once the pickup assembly 108 is in position, the DVD device can begin to write or record data; however, the DVD device begins recording data at an outer radius of the disc and continues to record data radially inwardly towards the center of the disc. For example, in FIGS. 3-5, an outer portion of the spiral track 16 where recording can begin is designated by reference numeral 22 whereas an inner portion of the track 16 where recording can end is designated by reference numeral 24. Thus, the pickup assembly 108 can move gradually along the spiral track 16 from the outer portion 22 towards the inner portion 24.

In one arrangement, the DVD device increases the RPM speed of the disc 102 as the pickup assembly 108 moves radially inwardly along the spiral track 16 during the writing step. Continuously increasing the RPM speed of the disc 102 as the pickup assembly 108 moves closer to the center of the disc 102 can enable the DVD device to record data on the disc 102 at a fixed recording rate.

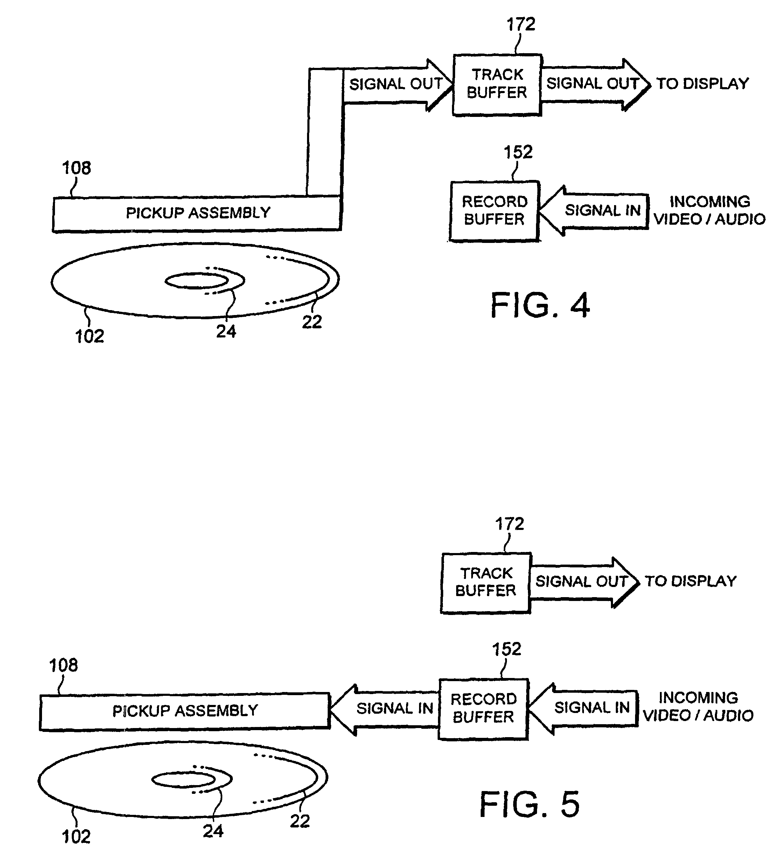

During this recording process, incoming data is usually received at 5.5 Mb/s but can be received at varying rates. Typically, incoming data merely propagates through the record buffer 152 as it is being recorded onto the disc 102. As a result, the record buffer 152 can be empty or nearly empty while the pause feature is activated. In addition, since no reading is taking place at this time, no data is entering or leaving track buffer 172. Referring to FIG. 4, after a pause resume command is received, the DVD device can temporarily stop writing data in anticipation of the reading step. As an example, the DVD device can temporarily stop writing at the inner portion 24 of the spiral track 16. Thus, the record buffer 152 can begin to store temporarily the incoming data. Thereafter, the DVD device can position the pickup assembly 108 over that section of the disc 102 where the recording of the incoming data was initiated. For purposes of this example, that disc position is the outer portion 22 of the spiral track 16.

During this transition and throughout the reading step, the DVD device preferably does not change the RPM speed of the disc 102. Hence, the RPM speed of the disc 102 while the DVD device reads data is preferably the same as the RPM speed of the disc 102 that was last used during the previous recording step. For example, the RPM speed of the disc 102 to read data at the outer portion 22 of spiral track 16 is preferably equivalent to the RPM speed of the disc 102 that was last used to record data at the inner portion 24. Since the pickup assembly 108 has moved towards the outer edge of the disc 102, however, the linear velocity of the disc 102 at the outer portion 22 is higher as compared to the linear velocity of the disc 102 at the inner portion 24. The increase in linear velocity can allow the DVD device to read data at a higher rate without substantially increasing the RPM speed of the disc 102. It should be noted, however, that the rotational speed of the disc 102 during the reading step is not limited to the rotational speed of the disc 102 maintained during the previous recording step, as it may be desirable to vary the rotational speed of the disc 102 during the reading step.

Once the DVD device begins to read the previously recorded data, it can send this data to the track buffer 172. Data typically leaves the track buffer 172 at a rate of 5.5 Mb/s, but the DVD device can read data from the disc 102 at a higher rate. Accordingly, the track buffer 172 can accumulate data read from the disc 102. This data can continue to be decoded and displayed after the pickup assembly 108 temporarily stops reading and attends to writing data.

As shown in FIG. 5, when the data in the record buffer 152 reaches a predetermined capacity, the DVD device can suspend the reading process. With its supply of data temporarily stopped, the track buffer 172 can begin to empty. The DVD device can then move the pickup assembly 108 from the location where reading just occurred, for example, the outer portion 22, to the spot on the disc 102 where the incoming data was last written, for example, the inner portion 24.

The DVD device preferably does not change the RPM speed of the disc 102 when moving the pickup assembly 108 from the reading position to the writing position. Therefore, as the DVD device prepares to record data at the inner radius where recording last occurred, the RPM speed of the disc 102 is preferably equal to the RPM speed of the disc 102 last reached at this location during the immediate preceding writing step. For example, when the DVD device positions the pickup assembly 108 over the inner portion 24 of the spiral track 16, the disc 102 is already spinning at the correct rotational speed for recording to occur at a fixed rate at this particular location. Accordingly, it is unnecessary for the DVD device to vary the rotational speed of the disc 102 in order to reestablish the writing step at an inner radius. It is understood, however, that the invention is not limited in this regard, as it may be desirable to vary the rotational speed of the disc 102 during the reading step.

The DVD device can then record on the disc 102 the data that has accumulated in the record buffer 152. Writing can continue until the amount of data in the track buffer 172 drops to a predetermined level. When that happens, the DVD device can once again temporarily stop writing and move the pickup assembly 108 to the spot on the disc 102 where data was last read. Thereafter, the DVD device will proceed to read data. As the DVD device continues to alternate between reading and writing, the device preferably maintains the angular velocity of the disc 102 at the rotational speed required for the writing steps. This process of jumping between reading and writing can continue until the user terminates the pause-resume mode of operation.

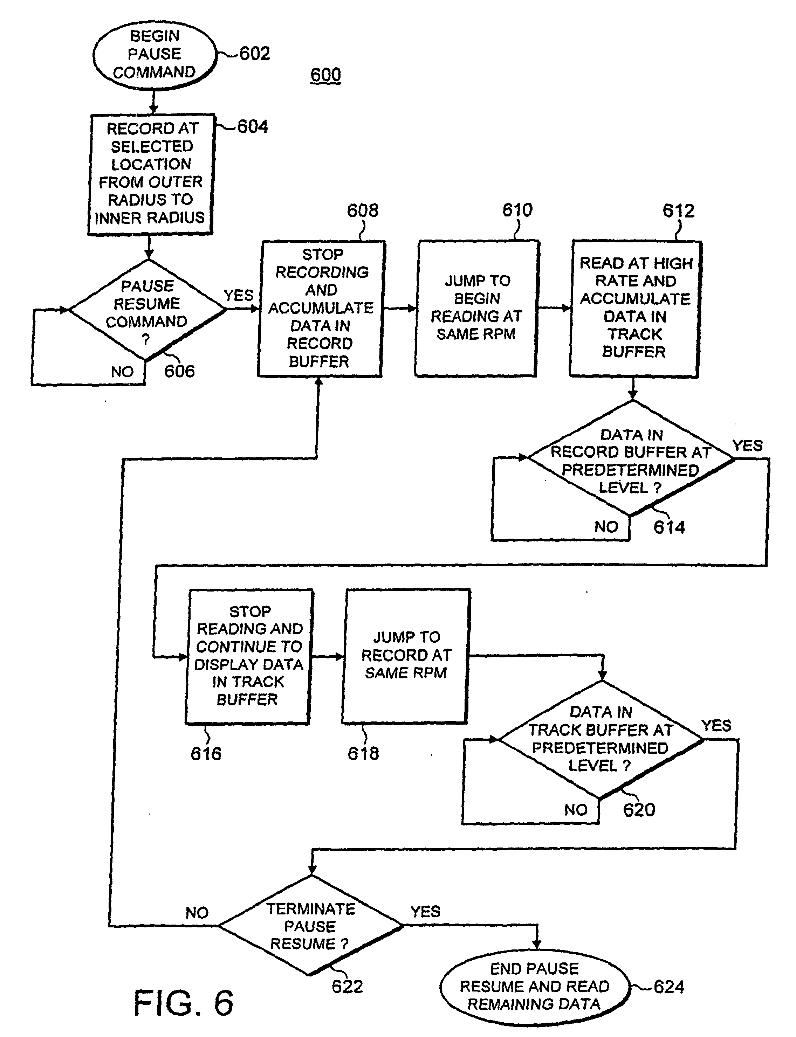

Turning to FIG. 6, flow chart 600 illustrates the preferred method of continuous recording from an outer radius of the disc 102 to an inner radius and periodically interrupting the recording to read the recorded data. The process is initiated in step 602 when a pause command is received, for example, via the advanced features buffer 136. At step 604, the DVD device can begin to record data at a selected location on the disc 102 as shown in FIG. 3. The selected location can be chosen by a user, or the DVD device can simply begin recording at a location where unused space is available. The DVD device begins recording at an outer radius of the disc 102 and continues to record along spiral track 16 towards an inner radius of the disc 102. Recording can proceed until the DVD device receives a pause resume command in step 606.

If a pause-resume command is received in step 606, the DVD device can stop recording and begin accumulating incoming data in the record buffer 152 as shown in step 608. This incoming data will be recorded at the next write step. At step 610, the pickup assembly 108 can jump back to the outer radius on the disc 102 where the earlier portion of the presentation was recorded on the disc 102. At step 612, since the linear velocity of the disc 102 is higher at the outer radius, the DVD device can begin to read data at a higher rate as compared to the previous recording rate at the inner radius. Additionally, this data can accumulate in the track buffer 172.

In step 614, the DVD device can continue reading until the data in the record buffer 152 reaches a predetermined level which indicates that it is approaching or is at maximum capacity. At step 616, once this predetermined level is reached, the DVD device can stop reading and can continue to display the data accumulated in the track buffer 172 as the DVD device temporarily suspends the reading process. At step 618, the pickup assembly 108 jumps back to the inner radius of the disc 102 where recording last occurred to begin writing data once again. The disc 102 is maintained at a constant speed during this jump. Since the linear velocity at this inner radius is already matched to the recording rate that occurred here during the previous recording process, it is unnecessary for the DVD device to alter the RPM speed of the disc 102. As shown in step 620, the DVD device can then record data at the inner radius until the data in the track buffer 172 drops to a certain level indicating that the track buffer 172 is nearly empty. In accordance with step 622, the pause-resume mode can continue at step 608 until the user indicates that the pause-resume mode should be terminated. Alternatively, in the event disc capacity is reached, the pause-resume mode can also stop at step 622. After the pause-resume command is deactivated, the DVD device can read the remaining data as shown in step 624.

The present invention advantageously allows the DVD device to read data at a high rate without varying the RPM speed of the disc 102. A higher reading rate increases the combined average bit rate. Moreover, it is unnecessary for the DVD device to vary the RPM speed of the disc 102 during the read/write transitions. This eliminates the time required to accelerate or decelerate the disc 102 and further contributes to a higher combined average bit rate. In addition, fewer RPM variations leads to lower power consumption levels and results in less wear and tear on the spindle motor.

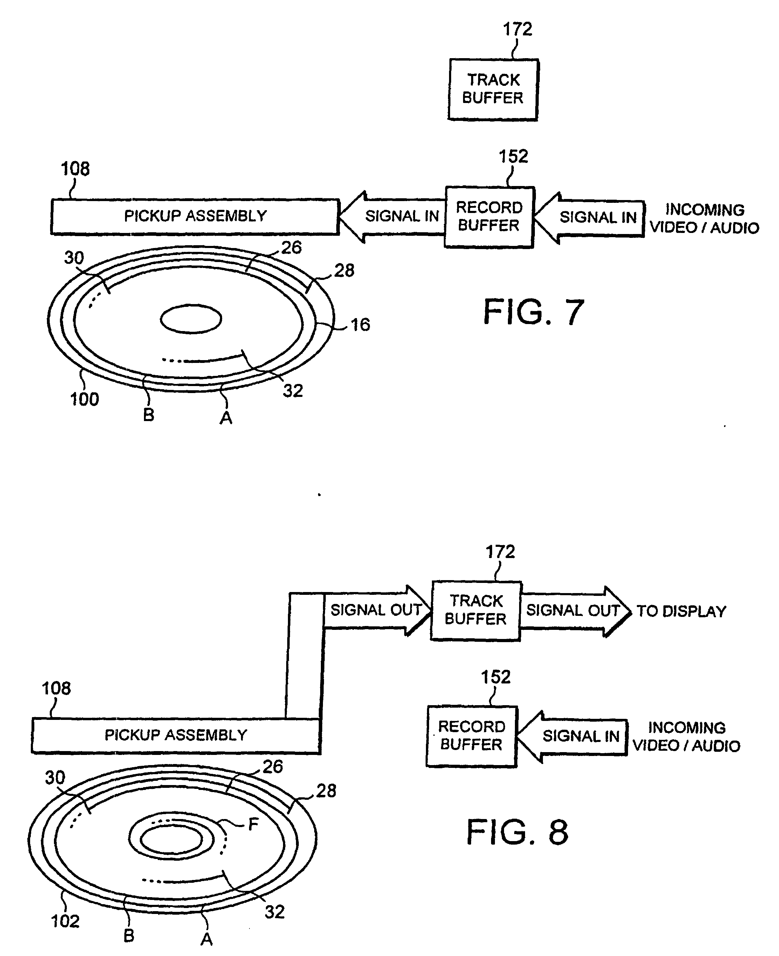

Although recording data inwardly along a spiral track presents several significant advantages, a conventional DVD disc may not be suitable for recording in this manner. This is because conventional DVD discs are formatted to record video from an inner radius of the disc to an outer radius of the disc. The present invention is capable of recording data from an outer radius to an inner radius in such a way that a conventional disc can be used for outer to inner recording. One way the invention can do this is by creating zones on a disc for recording data sequentially inwardly towards the center of the disc. FIGS. 7-9 illustrate this process.

Referring to FIG. 7, once the DVD device receives a pause command, the DVD device can move the pickup assembly 108 to a selected location on the disc 102. Once the pickup assembly 108 is in position, the DVD device can begin to write data along the spiral track 16. For example, recording can begin at a selected location on the disc 102 designated by reference numeral 26. The direction of recording, however, is radially outwardly from this selected location 26.

The DVD device can continue to record data along the spiral track 16 for a predetermined time period. This preset time period can be used to divide the disc 102 into a number of recordable sections whose physical length can be directly proportional to the duration of the preset time period. The duration of the time period can be any appreciable length of time. The length of the spiral track 16 on which data is recorded during this preset time period is referred to as a zone. For example, recording can proceed from selected location 26 for a preset duration of two minutes. Once the two-minute period expires, the DVD device will temporarily stop writing at an outer location on the disc 102 designated by reference numeral 28. The portion of the spiral track 16 on which data was written between selected location 26 and outer location 28 is a zone and is designated by reference letter A. Once a first zone is completed, the DVD device will preferably create a second zone immediately inward of the first zone. That is, the DVD device will preferably begin recording data along a portion of the spiral track 16 preceding the original recording location. This recording will preferably proceed radially outward from the location on the disc where the second zone begins for the same predetermined amount of time used to create the first zone. As a result, the recording can stop at the location on the disc 102 where the first zone begins. After the second zone is completed, the DVD device can continue to create zones containing recorded data for as long as the pause or pause-resume commands are activated. Each new zone is preferably immediately inward of the last zone just completed.

As an example, the DVD device can move the pickup assembly 108 from the outer location 28 to an inner location on the disc 102 designated by reference numeral 30. Starting at the inner location 30, the DVD device can then write data along the spiral track 16 for two minutes, ultimately ending at the selected location 26. The portion of the spiral track 16 between the inner location 30 and the selected location 26 is a second zone and is designated by reference letter B. After zone B is completed, the pickup assembly 108 can jump from the selected location 26 to another inner location on the disc 102 designated as reference numeral 32 in order to create the next zone. As noted earlier, the DVD device can continue to create zones so long as the device is recording data on the disc 102.

During this process, the DVD device can monitor the rotational speed of the disc 102 to ensure that writing occurs at the proper rate. For example, as the DVD device records data in zone A radially outwardly from the selected location 26, the DVD device can, if necessary, decrease the RPM speed of the disc 102 to allow writing to occur at a fixed rate. Conversely, once the pickup assembly 108 jumps from the outer location 28 to the inner location 30, the DVD device can, if necessary, increase the RPM speed of the disc 102 to ensure that recording can occur at its proper rate. Similar to the recording in zone A, the DVD device can decrease the RPM speed of the disc 102 as recording continues radially outwardly in zone B.

As the DVD device writes data to the disc 102, incoming data is usually received at 5.5 Mb/s but can be received at varying rates. Typically, incoming data merely propagates through the record buffer 152 as it is being recorded onto the disc 102. As a result, the record buffer 152 can be empty or nearly empty while the pause feature is activated. In addition, since no reading is taking place at this time, no data is entering or leaving track buffer 172.

Turning to FIG. 8, after a pause-resume command is received, the DVD device can temporarily stop writing data in the zone where recording is currently occurring in anticipation of the reading step. For example, writing can be suspended in an innermost zone designated by reference letter F. Subsequently, the record buffer 152 can begin to store temporarily the incoming data. The pickup assembly 108 can then jump to the outermost zone to begin reading data. Continuing with the example, the outermost zone is zone A. The DVD device will then read data starting at the selected location 26 in zone A.

During this transition and throughout the reading step, the DVD device preferably does not change the RPM speed of the disc 102. Hence, the RPM speed of the disc 102 while the DVD device reads data in the outermost zone is preferably the same as the RPM speed last used in the innermost zone where recording last occurred. As an example, the RPM speed of the disc 102 in zone A where reading is now occurring is the same as the RPM speed of the disc 102 last reached in innermost zone F, the zone where recording last occurred. Since the pickup assembly 108 has moved towards the outer edge of the disc 102, however, the linear velocity of the disc 102 at zone A is higher as compared to the linear velocity of the disc 102 at zone F. The increase in linear velocity allows the DVD device to read data at a higher rate without increasing the RPM speed of the disc 102. It should be noted, however, that the rotational speed of the disc 102 during the reading step is not limited to the rotational speed of the disc 102 maintained during the previous recording step, as it may be desirable to vary the rotational speed of the disc 102 during the reading step.

As the DVD device reads the previously recorded data in the outermost zone, it can send this data to the track buffer 172. Data typically leaves the track buffer 172 at a rate of 5.5 Mb/s, but the DVD device can read data from the disc at a higher rate. Accordingly, the track buffer 172 can accumulate data read from the disc. This data can continue to be displayed after the pickup assembly 108 temporarily stops reading and attends to the next writing step.

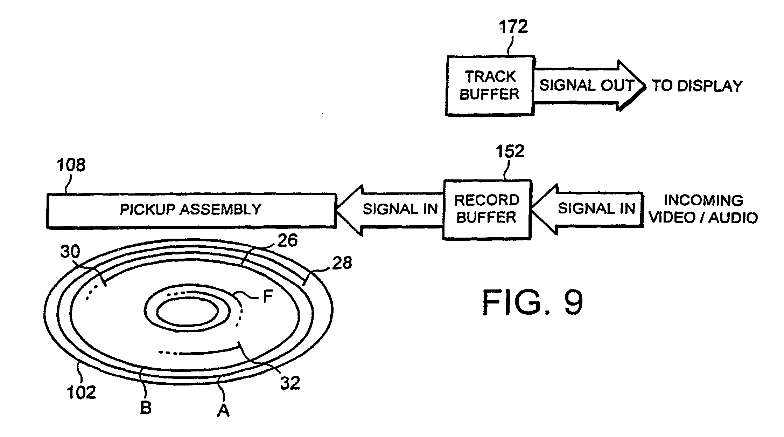

Referring to FIG. 9, when the data in the record buffer 152 reaches a predetermined level, the DVD device can suspend the reading process in the outermost zone. With its supply of data temporarily stopped, the track buffer 172 can begin to empty. The DVD device can then move the pickup assembly 108 back to the innermost zone where recording last occurred to resume recording. For example, the DVD device can temporarily stop reading in zone A and jump back to innermost zone F. The DVD device can then begin recording in innermost zone F at the location on the disc 102 where recording last took place. Moreover, the recording will proceed radially outwardly in innermost zone F as was done in the previous recording step conducted in innermost zone F.

The DVD device preferably does not change the RPM speed of the disc 102 when moving the pickup assembly 108 from the reading position in the outermost zone to the writing position in the innermost zone. Therefore, as the DVD device prepares to record data in the innermost zone where recording last occurred, the RPM speed of the disc 102 is preferably equal to the RPM speed of the disc 102 reached at this location during the immediate preceding writing step. For example, when the DVD device positions the pickup assembly 108 over the proper recording location in innermost zone F, the disc 102 is already spinning at the correct rotational speed for recording to occur at the maximum rate at this location. As a result, it is unnecessary for the DVD device to vary the angular velocity of the disc 102 in order to commence writing at the innermost zone. It is understood, however, that the invention is not limited in this regard, as it may be desirable to vary the rotational speed of the disc 102 during the reading step.

The DVD device can then record in the innermost zone the data that has accumulated in the record buffer 152. Writing can continue until the amount of data in the track buffer 172 drops to a predetermined level. When that happens, the DVD device can once again temporarily stop writing in the innermost zone and move pickup assembly 108 back to the outermost zone. Thereafter, the DVD device will proceed to read data in an outer zone beginning from the point where reading was previously terminated. As the DVD device continues to alternate between reading and writing in the zones, the device preferably maintains the angular velocity of the disc 102 at the rotational speed required for the writing steps.

While the DVD device remains in pause-resume mode, it will continue to record data to the disc 102. Thus, the DVD device can continue to create zones in which to place the recorded data. Once a new zone is completed, the pickup assembly 108 can jump closer to the center of the disc 102 to create another zone. During pause-resume, a zone is preferably completed when the time periods spent during each writing step in that zone summed together equals the predetermined time period. For example, the DVD device monitors the duration of each recording step conducted in zone F. If the sum of the durations of these recording steps equals the duration of the predetermined time period, then zone F is completed, and the pickup assembly 108 can jump inward to allow the DVD device to create a new innermost zone. Alternatively, the zones can be physically defined.

Similarly, once the DVD device reads all the data in a particular zone, the pickup assembly 108 can jump to the next immediately inward zone to allow the DVD device to continue reading. For example, once the DVD device completes reading data in the outermost zone A, the playback assembly 108 can jump to the inner location 30 to begin reading data in zone B. This process of reading and writing in these zones can continue until the user terminates the pause-resume mode of operation.

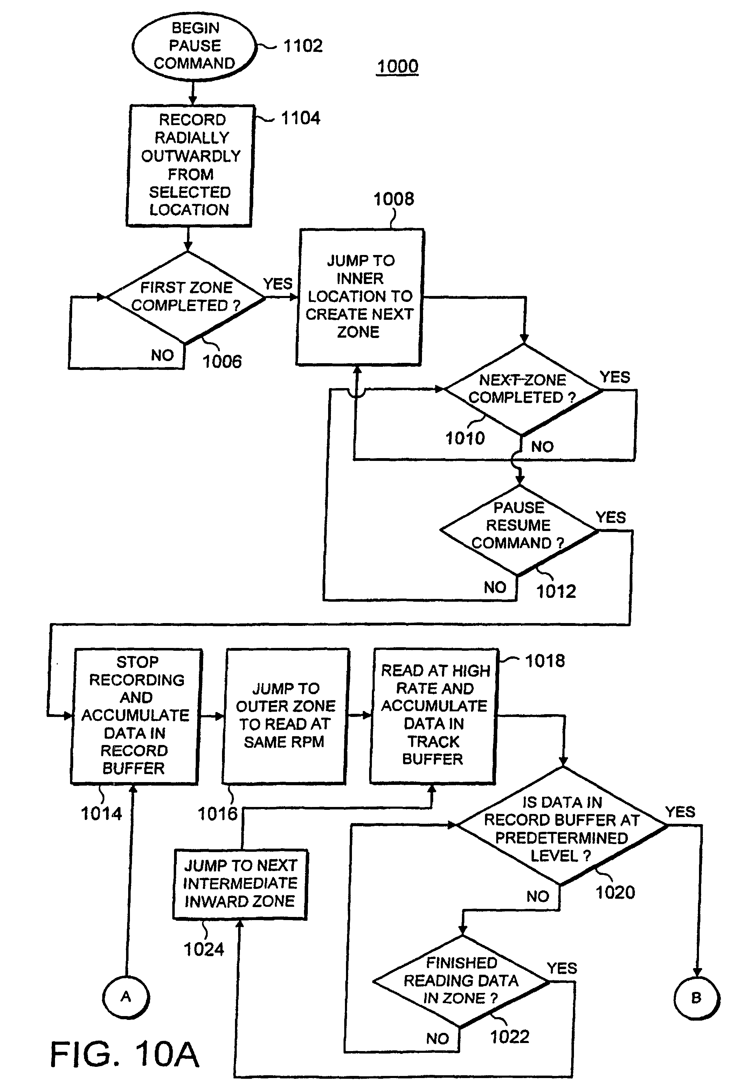

Turning to FIG. 10A, flow chart 1000 illustrates the preferred method of sequentially recording from an outer zone of the disc 102 to an inner zone of the disc 102 and periodically interrupting the recording to read data on the disc 102. The process is initiated in step 1002 when a pause command is received, for example, via the advanced features buffer 136. At step 1004, the DVD device can begin to record data at a selected location on the disc 102 as shown in Fig. 7. The selected location can be chosen by a user, or the DVD device can simply begin recording at a location where unused space is available. The DVD device can begin recording data radially outwardly along the spiral track 16 from the selected location on the disc 102. This recording step can proceed until a zone is created as shown in step 1006.

At step 1008, once a zone is completed, the pickup assembly 108 can jump to an inner location on the disc 102 to create the next zone. Preferably, the new zone will be immediately inward of the zone just completed. In accordance with step 1010, the DVD device will record data in the new zone until the new zone is complete unless a pause-resume command is received, as will be explained below. After a particular zone is completed, the creation of new zones during the writing process will continue at step 1008. During this process, the DVD device constantly monitors and adjusts the rotational speed of the disc 102 to permit the device to record data at the proper rate.

If the DVD device receives a pause-resume command in step 1012, then the DVD device can stop recording and begin accumulating incoming data in the record buffer 152 as shown in step 1014. This incoming data will be recorded at the next write step. The pickup assembly 108 can then jump back in step 1016 to the outer zone on the disc 102 where the recording process first began. Since the linear velocity of the disc is higher at this location, the DVD device can begin reading data in this zone at a higher rate as compared to the recording rate in the zone where recording last occurred, as shown in step 1018. In addition, the DVD device can now accumulate this data in the track buffer 172.

At step 1020, the DVD device can continue reading in the outer zone until the data in the record buffer 152 reaches a predetermined level which indicates that it is approaching or is at maximum capacity. At step 1022, if the DVD device reads all the data in the outer zone before the record buffer 152 reaches the predetermined level, the reading step is temporarily interrupted to allow the pickup assembly 108 to jump inward to the next zone. In accordance with step 1024, the pickup assembly 108 will preferably jump to the next immediately inward zone to allow the DVD device to continue the reading step. Although the jump can result in the pickup assembly 108 moving slightly inward, the reading step is still occurring in a zone that is closer to the outer edge of the disc 102 as compared to the zone where recording was last conducted. Thus, the DVD device can continue to read at a high rate at step 1018 without substantially changing the rotational speed of the disc 102.

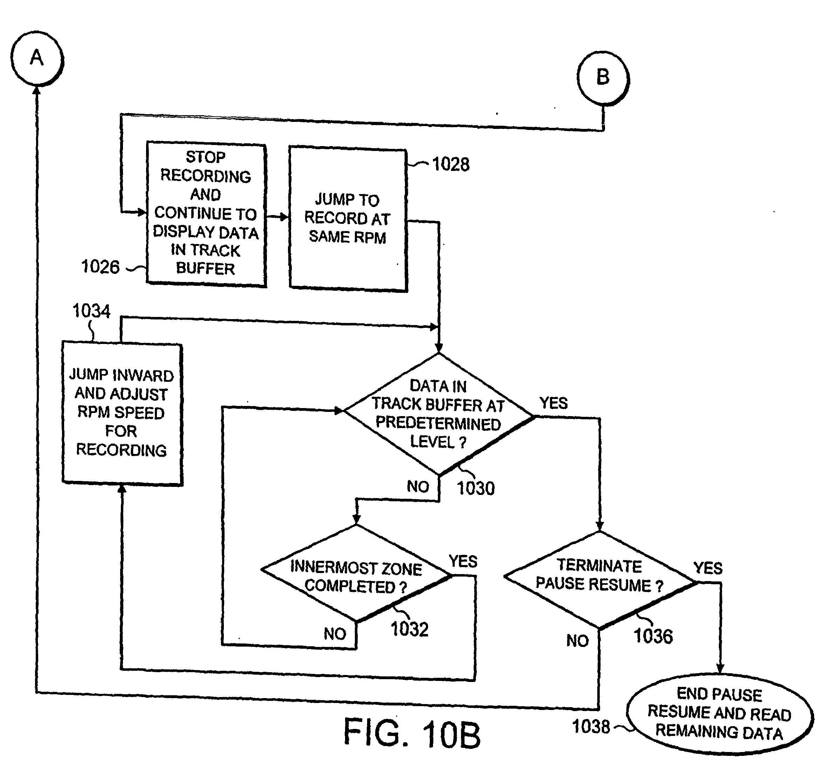

If the record buffer 152 reaches capacity at step 1020 before the reading step requires a zone change, then the flowchart continues to FIG. 10B through jump circle B. At step 1026, the DVD device can temporarily suspend reading in the zone where reading is currently taking place. In addition, the DVD device can continue to display the data accumulated in the track buffer 172. At step 1028, the pickup assembly 108 can jump inward to the innermost zone where recording last occurred to begin writing data once again. The disc 102 is preferably maintained at a constant speed during this jump. It is understood, however, that the invention is not limited in this regard, as it may be desirable to vary the rotational speed of the disc 102 during the jump and reading step. Since the linear velocity at this innermost zone is already approximately matched to the recording rate that occurred here during the previous recording step, it is unnecessary for the DVD device to alter the RPM speed of the disc 102. As shown in step 1030, the DVD device can then record data in the innermost zone until the data in the track buffer 172 drops to a certain level indicating that the track buffer 172 is nearly empty.

At step 1032, if the innermost zone is completed before the data in the track buffer 172 drops to the preset level, the recording step is temporarily interrupted. At step 1034, the pickup assembly 108 can move closer to the center of the disc to permit the DVD device to create another innermost zone. In addition, the DVD device correspondingly adjusts the angular velocity of the disc 102 to enable the device to write at the proper rate in the new zone. As shown in the flow chart 1000, this particular recording step will continue in the new innermost zone until the data in the track buffer 172 drops to the minimum level.

The DVD device will alternate between reading and writing data in the zones as long as the device is in pause-resume mode. At step 1036, if the pause-resume command remains activated, flowchart continues in FIG. 10A through jump circle A. Thereafter, the reading and writing process will continue at step 1014. If the user, however, terminates the pause-resume command, or in the event disc capacity is reached, the DVD device will cease recording and read the remaining data as shown in step 1038.

Recording data in zones beginning at an outermost zone and ending at an innermost zone allows the DVD device to conduct outer-to-inner recording on a conventional DVD disc. Thus, if a conventional DVD disc is used to record a video presentation, the process of increasing the combined average bit rate by allowing the DVD device to read data at a high rate without varying the rotational speed of the disc 102 is still available.

## Claims

1. In a recordable disc medium device, a method for pausing a video presentation comprising:
responsive to a pause command, recording said video presentation on said disc medium beginning at a selected record location; and
responsive to a pause resume command, periodically interrupting said recording at a first disc medium location to read from said disc medium a portion of said recorded video presentation at a second record location, said first disc medium location at a disc radius less than said second record location.

2. The method according to claim 1 wherein said recording occurs continuously inwardly towards the center of said disc medium along a spiral track of said disc medium.

3. The method according to claim 1 wherein said recording occurs sequentially inwardly towards the center of said disc medium, said recording occurring in a plurality of zones located on said disc medium.

4. The method according to claim 3 wherein said plurality of zones are radially defined from outermost to innermost, said recording beginning at one of said outermost plurality of zones and ending at one of said innermost plurality of zones.

5. The method according to claim 4 wherein said recording within each one of said plurality of zones occurs radially outwardly along a spiral track of said disc medium.

6. The method according to claim 1 wherein the rotational speed of said disc medium is maintained at a constant velocity during said interrupting step of said pause resume command.

7. The method according to claim 1 wherein said recording step determines the rotational speed of said disc medium during said recording and said reading steps following said pause resume command.

8. A recordable disc medium system for pausing a video presentation comprising:
a disc medium recorder responsive to a pause command for recording said video presentation on a disc medium at a selected record location; and
a disc player responsive to a pause resume command for periodically interrupting said recording at a first disc medium location to read from said disc medium a portion of said recorded video presentation at a second record location, said first disc medium location at a disc radius less than said second record location.

9. The recordable disc medium system according to claim 8 wherein said recording occurs continuously inwardly towards the center of said disc medium along a spiral track of said disc medium.

10. The recordable disc medium system according to claim 8 wherein said recording occurs sequentially inwardly towards the center of said disc medium, said recording occurring in a plurality of zones located on said disc medium.

11. The recordable disc medium system according to claim 10 wherein said plurality of zones are radially defined from outermost to innermost, said recording beginning at one of said outermost plurality of zones and ending at one of said innermost plurality of zones.

12. The recordable disc medium system according to claim 10 wherein said recording within each one of said plurality of zones occurs radially outwardly along a spiral track of said disc medium.

13. The recordable disc medium system according to claim 8 wherein the rotational speed of said disc medium is maintained at a constant velocity during interrupting of said recording following said pause resume command.

14. The recordable disc medium system according to claim 8 wherein said recording step determines the rotational speed of said disc medium during said recording and said reading steps of said pause resume command.

## Patentansprüche

1. Verfahren mit einem beschreibbaren Plattenmediumgerät zum Anhalten einer Videodarstellung, umfassend:
als Reaktion auf einen Pause-Befehl das Aufzeichnen der Videodarstellung auf dem Plattenmedium beginnend bei einer ausgewählten Aufzeichnungsstelle und
als Reaktion auf einen Pause-Wiederaufnahme-Befehl das periodische Unterbrechen des Aufzeichnens an einer ersten Plattenmediumstelle, um von dem Plattenmedium einen Teil der aufgezeichneten Videodarstellung an einer zweiten Aufzeichnungsstelle zu lesen, wobei sich die erste Plattenmediumstelle bei einem Plattenradius befindet, der geringer ist als die zweite Aufzeichnungsstelle.

2. Verfahren nach Anspruch 1, wobei das Aufzeichnen entlang einer Spiralspur des Plattenmediums kontinuierlich nach innen in Richtung der Mitte des Plattenmediums erfolgt.

3. Verfahren nach Anspruch 1, wobei das Aufzeichnen sequentiell nach innen in Richtung der Mitte des Plattenmediums erfolgt, wobei das Aufzeichnen in mehreren auf dem Plattenmedium angeordneten Zonen erfolgt.

4. Verfahren nach Anspruch 3, wobei die mehreren Zonen radial von der äußersten zur innersten definiert sind, wobei das Aufzeichnen an einer der äußersten mehreren Zonen beginnt und bei einer der innersten mehreren Zonen endet.

5. Verfahren nach Anspruch 4, wobei das Aufzeichnen in jeder einzelnen der mehreren Zonen entlang einer Spiralspur des Plattenmediums radial nach außen erfolgt.

6. Verfahren nach Anspruch 1, wobei die Drehzahl des Plattenmediums während des Unterbrechungsschritts des Pause-Wiederaufnahme-Befehls bei einer konstanten Geschwindigkeit gehalten wird.

7. Verfahren nach Anspruch 1, wobei der Aufzeichnungsschritt die Drehzahl des Plattenmediums während des Aufzeichnungsschritts und des Leseschritts nach dem Pause-Wiederaufnahme-Befehl bestimmt.

8. Beschreibbares Plattenmediumsystem zum Anhalten einer Videodarstellung, umfassend:
einen Plattenmedium-Recorder, der auf einen Pause-Befehl reagiert und die Videodarstellung auf einem Plattenmedium an einer ausgewählten Aufzeichnungsstelle aufzeichnet; und
ein Plattenabspielgerät, das auf einen Pause-Wiederaufnahme-Befehl reagiert und periodisch das Aufzeichnen an einer ersten Plattenmediumstelle unterbricht, um von dem Plattenmedium einen Teil der aufgezeichneten Videodarstellung an einer zweiten Aufzeichnungsstelle zu lesen, wobei die erste Plattenmediumstelle sich bei einem Plattenradius befindet, der geringer ist als die zweite Aufzeichnungsstelle.

9. Beschreibbares Plattenmediumsystem nach Anspruch 8, wobei das Aufzeichnen kontinuierlich nach innen in Richtung der Mitte des Plattenmediums entlang einer Spiralspur des Plattenmediums erfolgt.

10. Beschreibbares Plattenmediumsystem nach Anspruch 8, wobei das Aufzeichnen sequentiell nach innen in Richtung der Mitte des Plattenmediums erfolgt, wobei das Aufzeichnen in mehreren auf dem Plattenmedium angeordneten Zonen erfolgt.

11. Beschreibbares Plattenmediumsystem nach Anspruch 10, wobei die mehreren Zonen radial von der äußersten zur innersten definiert sind, wobei das Aufzeichnen an einer der äußersten mehreren Zonen beginnt und einer der innersten mehreren Zonen endet.

12. Beschreibbares Plattenmediumsystem nach Anspruch 10, wobei das Aufzeichnen in jeder der mehreren Zonen radial nach außen entlang einer Spiralspur des Plattenmediums erfolgt.

13. Beschreibbares Plattenmediumsystem nach Anspruch 8, wobei die Drehzahl des Plattenmediums während der Unterbrechung des Aufzeichnens nach dem Pause-Wiederaufnahme-Befehl bei einer konstanten Geschwindigkeit gehalten wird.

14. Beschreibbares Plattenmediumsystem nach Anspruch 8, wobei der Aufzeichnungsschritt die Drehzahl des Plattenmediums während des Aufzeichnungsschritts und während des Leseschritts des Pause-Wiederaufnahme-Befehls bestimmt.

## Revendications

1. Dans un dispositif à support de disque enregistrable, procédé pour effectuer une pause d'une présentation vidéo comprenant :
en réponse à une commande de pause, l'enregistrement de ladite présentation vidéo sur ledit support de disque commençant au niveau d'un emplacement d'enregistrement sélectionné ; et
en réponse à une commande de reprise après pause, l'interruption périodique dudit enregistrement au niveau d'un premier emplacement de support de disque afin de lire à partir dudit support de disque une partie de ladite présentation vidéo enregistrée au niveau d'un deuxième emplacement d'enregistrement, ledit premier emplacement de support de disque se trouvant à un rayon de disque inférieur à celui dudit deuxième emplacement d'enregistrement.

2. Procédé selon la revendication 1, dans lequel ledit enregistrement se produit de manière continue vers l'intérieur vers le centre dudit support de disque le long d'une piste spiralée dudit support de disque.

3. Procédé selon la revendication 1, dans lequel ledit enregistrement se produit séquentiellement vers l'intérieur vers le centre dudit support de disque, ledit enregistrement se produisant dans une pluralité de zones situées sur ledit support de disque.

4. Procédé selon la revendication 3, dans lequel ladite pluralité de zones sont définies radialement depuis la partie la plus externe vers la partie la plus interne, ledit enregistrement commençant au niveau de l'une de ladite pluralité la plus externe de zones et se terminant au niveau de l'une de ladite pluralité la plus interne de zones.

5. Procédé selon la revendication 4, dans lequel ledit enregistrement dans chacune de ladite pluralité de zones se produit radialement vers l'extérieur le long d'une piste spiralée dudit support de disque.

6. Procédé selon la revendication 1, dans lequel la vitesse de rotation dudit support de disque est maintenue à une vitesse constante durant ladite étape d'interruption de ladite commande de reprise après pause.

7. Procédé selon la revendication 1, dans lequel ladite étape d'enregistrement détermine la vitesse de rotation dudit support de disque durant ledit enregistrement et lesdites étapes de lecture après ladite commande de reprise après pause.

8. Système à support de disque enregistrable pour effectuer une pause d'une présentation vidéo comprenant :
un enregistreur de support de disque sensible à une commande de pause pour enregistrer ladite présentation vidéo sur un support de disque au niveau d'un emplacement d'enregistrement sélectionné ; et
un lecteur de disques sensible à une commande de reprise après pause pour interrompre périodiquement ledit enregistrement au niveau d'un premier remplacement de support de disque afin de lire à partir dudit support de disque une partie de ladite présentation vidéo enregistrée au niveau d'un deuxième emplacement d'enregistrement, ledit premier emplacement de support de disque se trouvant à un rayon de disque inférieur à celui dudit deuxième emplacement d'enregistrement.

9. Système à support de disque enregistrable selon la revendication 8, dans lequel ledit enregistrement se produit de manière continue vers l'intérieur vers le centre dudit support de disque le long d'une piste spiralée dudit support de disque.

10. Système à support de disque enregistrable selon la revendication 8, dans lequel ledit enregistrement se produit séquentiellement vers l'intérieur vers le centre dudit support de disque, ledit enregistrement se produisant dans une pluralité de zones situées sur ledit support de disque.

11. Système à support de disque enregistrable selon la revendication 10, dans lequel ladite pluralité de zones sont définies radialement depuis la partie la plus externe vers la partie la plus interne, ledit enregistrement commençant au niveau de l'une de ladite pluralité la plus externe de zones et se terminant au niveau de l'une de ladite pluralité la plus interne de zones.

12. Système à support de disque enregistrable selon la revendication 10, dans lequel ledit enregistrement dans chacune de ladite pluralité de zones se produit radialement vers l'extérieur le long d'une piste spiralée dudit support de disque.

13. Système à support de disque enregistrable selon la revendication 8, dans lequel la vitesse de rotation dudit support de disque est maintenue à une vitesse constante durant ladite étape d'interruption de ladite commande de reprise après pause.

14. Système à support de disque enregistrable selon la revendication 8, dans lequel ladite étape d'enregistrement détermine la vitesse de rotation dudit support de disque durant ledit enregistrement et lesdites étapes de lecture après ladite commande de reprise après pause.
